# EUROPÄISCHE PATENTSCHRIFT

(11) **EP 2 695 688 B1**
(45) Veröffentlichungstag und Bekanntmachung des Hinweises auf die Patenterteilung: **12.12.2018**
(21) Anmeldenummer: 13003421.8
(22) Anmeldetag: 06.07.2013
(51) Int. Cl.: B23B 29/04, B23B 27/04

(54) **Schneidvorrichtung**
Cutting device
Dispositif de coupe

(30) Priorität: 08.08.2012 DE 202012007620 U
(43) Veröffentlichungstag der Anmeldung: 12.02.2014
(73) Patentinhaber: KARL-HEINZ ARNOLD GmbH, 73760 Ostfildern (DE)
(72) Erfinder: Braun, Harald, D-73061 Ebersbach (DE); Meditz, Werner, D-72574 Bad Urach (DE)
(74) Vertreter: Patentanwälte Magenbauer & Kollegen Partnerschaft mbB

(56) Entgegenhaltungen:
- WO-A1-96/16763
- WO-A1-99/12680
- DE-U1-202006 008 229
- JP-A- 2000 343 304
- US-A- 402 400

## Beschreibung

Die Erfindung betrifft eine Schneidvorrichtung gemäß dem Oberbegriff des Patentanspruchs 1, mit einem eine schlitzförmige Ausnehmung aufweisenden Halter zur Aufnahme eines Schneideinsatzes, der in der Ausnehmung unter Vorspannung eines als eine Seite der Ausnehmung elastisch abspreizbar ausgebildeten Klemmfingers lösbar einspannbar oder eingespannt ist, wobei die andere Seite der Ausnehmung durch einen Basisabschnitt des Halters gebildet ist, wobei der Halter eine Drehlagerausnehmung zum drehbaren Einsetzen eines Betätigungselementes eines Betätigungswerkzeugs aufweist, und wobei eine Betätigungsfläche vorgesehen ist, gegen die ein weiteres Betätigungselement des eingesetzten Betätigungswerkzeugs derart in Anlage bringbar ist, dass der Klemmfinger durch eine Drehbewegung des Betätigungswerkzeugs zur Freigabe des eingespannten Schneideinsatzes aufspreizbar ist.

Eine Schneidvorrichtung dieser Art ist beispielsweise aus der WO 96/16763 A1 bekannt.

Die in der EP 0 654 316 A1 offenbarte Schneidvorrichtung besitzt einen Klemmarm, der mittels eines als Steckschlüssel ausgebildeten Betätigungswerkzeugs zur Freigabe eines Schneideinsatzes elastisch aufspreizbar ist. Dabei werden zwei Betätigungsstifte des Steckwerkzeugs in hierfür am Halter vorgesehene Stecköffnungen eingesteckt, wobei eine der Stecköffnungen am Basisabschnitt und eine andere am Klemmarm ausgebildet ist. Bei der Drehbewegung des Steckschlüssels um eine der basisseitigen Stecköffnung zugeordneten Drehachse kommt es zu einer elastischen Aufspreizung des Klemmarms, so dass der Schneideinsatz entnommen werden kann.

Bei dem vorerwähnten Halter ist also neben der schlitzförmigen Ausnehmung und der Drehlagerausnehmung eine weitere Einstecköffnung vorgesehen, die in dem relativ schmalen Materialbereich des Klemmarms durch einen separaten Arbeitsgang, beispielsweise Fräsbearbeitung, herzustellen ist. Dies ist aufwendig. Ferner befindet sich die Einstecköffnung oberhalb einer, einen eingesetzten Schneideinsatz festspannenden Klemmfläche, so dass zwischen der Einstecköffnung und der Klemmfläche ein relativ schmaler, die Spannkraft zumindest teilweise aufnehmender Materialstreifen ausgebildet ist. Hier kann es durchaus zu Verschleiß kommen, der die sichere Einspannung des Schneideinsatzes gefährdet.

Aufgabe der Erfindung ist es daher, eine Schneidvorrichtung der eingangs erwähnten Art zu schaffen, die einfach und kostengünstig herstellbar ist und ein zuverlässiges Einspannen eines Schneideinsatzes gewährleistet.

Diese Aufgabe wird durch eine Schneidvorrichtung mit den Merkmalen des unabhängigen Anspruchs 1 gelöst. Weiterbildungen der Erfindung sind in den Unteransprüchen dargestellt.

Die erfindungsgemäße Schneidvorrichtung zeichnet sich dadurch aus, dass die Drehlagerausnehmung auf Seiten des Basisabschnitts ausgebildet und die Betätigungsfläche von einem Längenabschnitt des die Ausnehmung begrenzenden Randes des Klemmfingers gebildet ist.

Dadurch, dass die Betätigungsfläche von einem Längenabschnitt des die Ausnehmung begrenzenden Randes des Klemmfingers gebildet ist, ist es möglich, die Betätigungsfläche gleich bei der Herstellung der Ausnehmung mit auszubilden. In der Regel wird die Ausnehmung im Halter durch spanabhebende Bearbeitung, beispielsweise Fräsbearbeitung, hergestellt. Ein separater Arbeitsschritt, wie bei dem vorerwähnten Stand der Technik durch Ausgestaltung der Bearbeitungsfläche als Rand einer im Basisabschnitt ausgebildeten langlochartigen Öffnung, ist nicht notwendig. Der Halter lässt sich daher schneller und kostengünstiger gegenüber dem Stand der Technik herstellen.

Die Betätigungsfläche ist exzentrisch bezüglich einer durch die Drehlagerausnehmung verlaufende Drehachse ausgebildet. Wird also das Betätigungswerkzeug in die Drehlagerausnehmung eingesetzt und um diese Drehachse gedreht, wird das weitere Betätigungselement des Betätigungswerkzeugs auf die exzentrische Betätigungsfläche gezwungen und gleitet dort ab, wodurch der Klemmfinger durch den gleichbleibenden Abstand der beiden Betätigungselemente des Betätigungswerkzeugs elastisch aufgespreizt wird, so dass der Schneideinsatz entnommen werden kann.

In besonders bevorzugter Weise weist der Klemmfinger eine den Schneideinsatz im eingespannten Zustand auf eine am Basisabschnitt ausgebildete Gegenfläche spannende Klemmfläche auf, an die sich in Einführrichtung des Schneideinsatzes die Betätigungsfläche anschließt.

In besonders bevorzugter Weise ist die Klemmfläche über ihre Längserstreckung ununterbrochen ausgebildet. Es gibt also vorzugsweise lediglich eine einzige Klemmfläche auf Seiten des Klemmfingers, die mit der am Basisabschnitt ausgebildeten Gegenfläche zusammenwirkt. Gemeinsam bilden Klemmfläche und Gegenfläche zumindest einen Teil des Plattensitzes, wobei die Klemmfläche und/oder die Gegenfläche im Querschnitt V-förmig ausgebildet sein können. Die Klemmfläche und die Gegenfläche bilden gemeinsam eine Art Zwei-Flächen-Auflage für den Schneideinsatz. Je weniger Auflageflächen wirken, desto zuverlässiger und genauer ist die Einspannung des Schneideinsatzes im Halter.

Gemäß der Erfindung erstreckt sich die Betätigungsfläche zwischen zwei im Klemmfinger ausgebildeten Anschlägen für das mit der Betätigungsfläche zusammenwirkende Betätigungselement des Betätigungswerkzeugs. Dadurch wird das Betätigungselement auf eine definierte Kurvenbahn gezwungen und kann dadurch für einen definierten Lösehub des elastischen Klemmfingers sorgen.

Bei einer Weiterbildung der Erfindung ist die Betätigungsfläche gegenüber der Klemmfläche bezüglich einer quer zu einer Längsachse der Ausnehmung orientierten Querrichtung zurückversetzt, also radial zur Längsache weiter außen als die Klemmfläche angeordnet.

In besonders bevorzugter Weise ist die Betätigungsfläche Bestandteil einer im Klemmfinger ausgebildeten Aussparung, die ihrerseits Bestandteil der Ausnehmung ist. Die vorstehend erwähnten Anschläge können dabei von quer zur Längsachse der Ausnehmung verlaufenden Randabschnitten des Klemmfingers gebildet sein.

Bei einer Weiterbildung der Erfindung schließt sich in Einführrichtung hinter dem Aussparung ein Freistich an. Auch dieser Freistich lässt sich bei der Herstellung der Ausnehmung gleich mit ausbilden.

Bei einer Weiterbildung der Erfindung umfasst die Schneidvorrichtung neben dem Halter auch ein, wenigstens einen Schneideinsatz aufweisendes Schneidwerkzeug.

Schließlich ist es möglich, dass die Schneidvorrichtung auch wenigstens ein Betätigungswerkzeug aufweist. Das Betätigungswerkzeug kann beispielsweise als Steckschlüssel ausgebildet sein. Die Betätigungselemente eines solchen Steckschlüssels sind dann beispielsweise Steckzapfen.

Ein bevorzugtes Ausführungsbeispiel der Erfindung ist in der Zeichnung dargestellt und wird im Folgenden näher erläutert. In der Zeichnung zeigen:
- Figur 1: eine perspektivische Darstellung eines bevorzugten Ausführungsbeispiels der erfindungsgemäßen Schneidvorrichtung,
- Figur 2: eine Seitenansicht eines mit einem Schneideinsatz bestückten Schneidwerkzeugs der Schneidvorrichtung von Figur 1,
- Figur 3: eine vergrößerte Darstellung der Einzelheit X aus Figur 2 ohne Schneideinsatz,
- Figur 4: eine Draufsicht auf ein Betätigungswerkzeug,
- Figur 5: eine vergrößerte Darstellung der Einzelheit Y aus Figur 1 mit eingesetztem Bearbeitungswerkzeug, wobei der Schneideinsatz eingespannt ist, und
- Figur 6: die Darstellung von Figur 5 nach der Betätigung des Betätigungswerkzeugs, wodurch der Klemmfinger in eine Freigabeposition überführt ist, in der der Schneideinsatz entnommen werden kann.

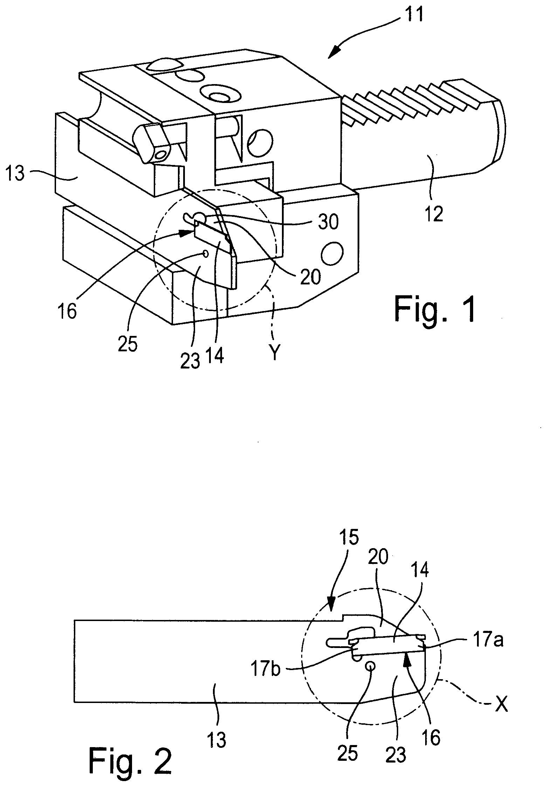

Die Figur 1 zeigt ein bevorzugtes Ausführungsbeispiel der erfindungsgemäßen Schneidvorrichtung 11. Die Schneidvorrichtung 11 ist hier rein beispielhaft in einer Ausführungsform dargestellt, die einen in einer Bearbeitungsmaschine zur spanenden Bearbeitung einsetzbaren und dort befestigbaren Grundhalter 12 zeigt. Am Grundhalter 12 wiederum ist ein Halter 13 eingespannt, der zur Aufnahme eines Schneideinsatzes 14 zur spanenden Bearbeitung von Werkstücken dient.

Die Kombination aus Halter 13 und Schneideinsatz 14 lässt sich auch mit Schneidwerkzeug 15 bezeichnen.

Im dargestellten Beispielsfall ist die Schneidvorrichtung 11 für eine Drehbearbeitung von Werkstücken vorgesehen. Insbesondere eignet sich der in Figur 1 dargestellte Halter 13 mit entsprechendem Schneideinsatz 14 zum Stechdrehen von Werkstücken, so dass der Halter 13 in diesem Fall auch als Stechklinge bezeichnet werden könnte.

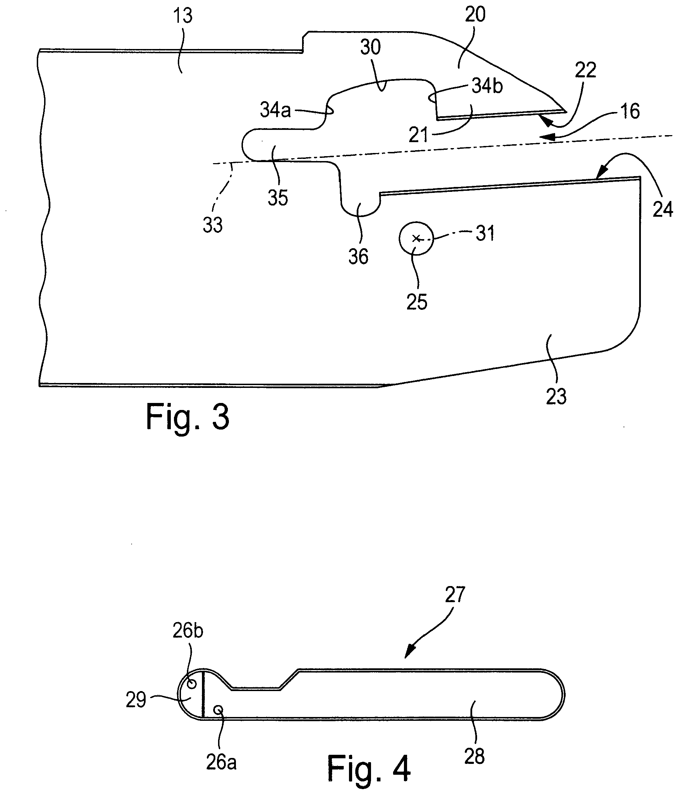

Wie insbesondere in Figur 3 dargestellt, besitzt der Halter 13 eine schlitzförmige Ausnehmung 16 zur Aufnahme eines Schneideinsatzes 14. Der Schneideinsatz 14 besitzt zwei an einander entgegengesetzten Enden liegende Schneidkeile 17a, 17b, die jeweils eine Schneidkante 18a, 18b aufweisen, von denen eine in Eingriff mit dem zu bearbeitenden Werkstück zu bringen ist.

Der Schneideinsatz 14 besitzt ferner zwei an einander entgegengesetzten Längsseiten ausgebildete Anlageflächen 19a, 19b, gegen die nachstehend noch näher bezeichnete Flächen des Halters 13 in Anlage gebracht werden.

Wie insbesondere in Figur 3 zu erkennen ist, besitzt der Halter 13 einen als eine Seite der schlitzförmigen Ausnehmung 16 elastisch abspreizbar ausgebildeten Klemmfinger 20. Der Klemmfinger 20 besitzt einen Spannabschnitt 21, dessen unterer, die Ausnehmung 16 begrenzender Rand eine Klemmfläche 22 bildet, die mit Klemmkraft auf die zugewandte Anlagefläche 19a des Schneideinsatzes 14 drückt.

Die andere Seite der Ausnehmung 16 wird von einem Basisabschnitt 23 gebildet, dessen ebenfalls die Ausnehmung 16 begrenzender Rand eine Gegenfläche 24 bildet, die in Anlage zur zugeordneten Anlagefläche 19b des Schneideinsatzes 14 gedrückt wird.

Der Halter 13 besitzt eine Drehlagerausnehmung 25 zum drehbaren Einsetzen eines Betätigungselements 26a eines Betätigungswerkzeugs 27. Das Betätigungswerkzeug 27 ist in Figur 4 beispielhaft in Form eines Steckschlüssels gezeigt. Das Betätigungswerkzeug 27 besitzt einen Schaft 28 und einen daran angesetzten Werkzeugkopf 29, an dem sich neben dem einen Betätigungselement 26a noch ein weiteres Betätigungselement 26b befindet. Die Betätigungselemente 26a, 26b sind im Falle eines Steckschlüssels als Steckzapfen ausgebildet. Die Betätigungselemente 26a, 26b sind in einem definierten Abstand zueinander angeordnet.

Wie insbesondere in Figur 3 dargestellt, besitzt der Halter 13 eine Betätigungsfläche 30, gegen die das weitere Betätigungselement 26b des eingesetzten Betätigungswerkzeugs 27 derart in Anlage bringbar ist, dass der Klemmfinger 20 durch eine Drehbewegung des Betätigungswerkzeugs 27 zur Freigabe des eingespannten Schneideinsatzes 14 aufspreizbar ist.

Dabei wird die Betätigungsfläche 30 von einem Längenabschnitt des die Ausnehmung 16 begrenzenden Randes des Klemmfingers 20 gebildet. Ferner befindet sich die Drehlagerausnehmung 25 auf Seiten des Basisabschnitts 23.

Wie in Figur 3 dargestellt, verläuft die Betätigungsfläche exzentrisch bezüglich einer durch die Drehlagerausnehmung 25 verlaufende Drehachse 31. Die Drehlagerausnehmung 25 ist im Falle eines als Steckschlüssel ausgebildeten Bearbeitungswerkzeugs als insbesondere kreisrundes Steckloch ausgebildet.

Die Betätigungsfläche 30 ist Bestandteil einer im Klemmfinger 20 ausgebildeten Aussparung 32, die ihrerseits Bestandteil der schlitzförmigen Ausnehmung 16 ist. Die Aussparung 32 schließt sich in Einführrichtung des Schneideinsatzes 14 an den Spannabschnitt 21 an. Die Aussparung 32 wird von zwei radial zu einer Längsachse 33 der Ausnehmung 16 verlaufenden Längenabschnitten des Randes des Klemmfingers 20 begrenzt, die als Anschläge 34a, 34b für das weitere Betätigungselement 26b des Betätigungswerkzeugs 27 dienen.

Die schlitzförmige Ausnehmung 16 besitzt ferner einen Freistich 35, der sich in Einführrichtung des Schneideinsatzes 14 im Wesentlichen direkt an die Aussparung 32 anschließt. An diesen Freistich 35 schließt sich ein weiterer quer zur Längsachse 33 orientierter Freistich 36 an. Die beiden Freistiche 35, 36 sorgen dafür, dass sich der Schneideinsatz 14 optimal einspannen lässt und die mittels des Klemmfingers 20 aufgebrachte Klemmkraft lediglich über die einander zugeordneten im Besonderen prismatisch ausgebildeten Anlageflächen 19a, 19b übertragen wird. Zwischen den beiden Freistichen befindet sich ein weiterer Anschlag 37, der die Einschubtiefe des Schneideinsatzes 14 vorgibt. Für eine Zentrierung in der quer zur Längsachse der Ausnehmung verlaufenden Richtung sorgen, wie bereits erwähnt, die Klemmfläche und die Gegenfläche und die damit zusammenwirkenden Anlageflächen 19a, 19b. Eine Zentrierung in der dritten Raumachse erfolgt durch die prismatische Konturierung der Klemmfläche 22 und Gegenfläche 24 einerseits und der Anlageflächen 19a, 19b andererseits.

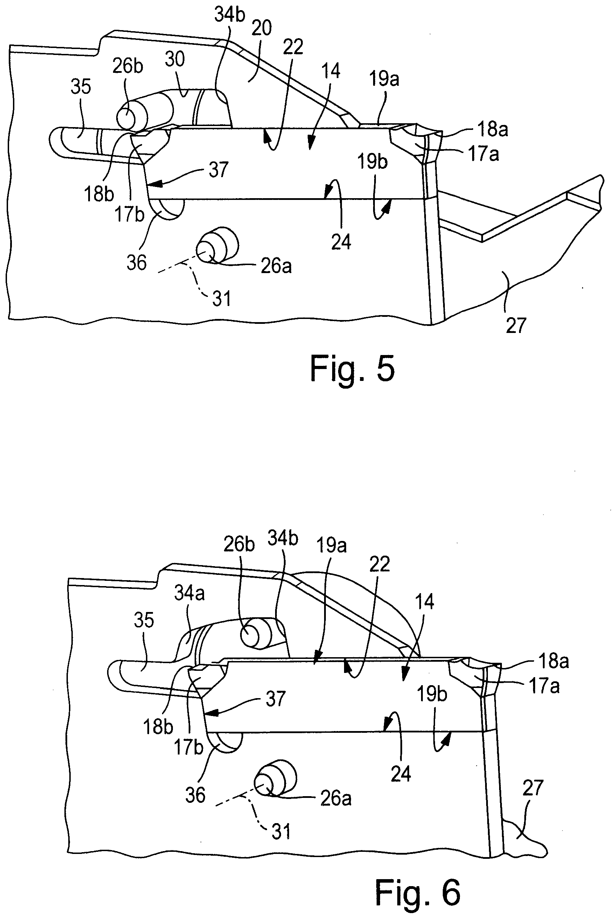

Figur 5 zeigt einen im Halter 13 eingespannten Schneideinsatz 14. Zum Entnehmen des Schneideinsatzes 14 wird das Betätigungswerkzeug mit seinen beiden Betätigungselementen 26a, 26b an den Halter 13 angesetzt, derart, dass das eine Betätigungselement 26a in die Drehlagerausnehmung 25 am Basisabschnitt 23 eintaucht und das andere Betätigungselement 26b in die Aussparung 32 in Anlage zur Betätigungsfläche 30 kommt. Dabei kommt das weitere Betätigungselement 26b zwangsläufig mit dem in Einführrichtung hinteren Anschlag 34a in Kontakt, da der Abstand zwischen der Drehachse 31 und der Betätigungsfläche 30 in diesem Bereich dem Abstand zwischen der Mittelachse des einen Betätigungselements 26a und der Außenfläche des anderen Betätigungselements 26b entspricht. Mit anderen Worten, das Betätigungswerkzeug 27 lässt sich in dieser Position in einfacher Weise ohne Verklemmung in den Halter 13 einführen.

Zur Freigabe des Schneideinsatzes 14 wird dann das Betätigungswerkzeug 27 um die Drehachse 31 gedreht, wobei das weitere Betätigungselement 26b eine Schwenkbewegung auf einem Kreisbogen um die Drehachse 31 ausführt. Jedoch wird das weitere Betätigungselement auf die exzentrische Betätigungsfläche 30 gezwungen, wobei der Abstand zwischen der Drehachse 31 und der Betätigungsfläche 30 im weiteren Verlauf nach vorne hin abnimmt, so dass der Klemmfinger 20 elastisch abgespreizt wird, so dass die Klemmfläche 22 von der zugeordneten Anlagefläche 19a des Schneideinsatzes 14 abgehoben wird. Diese Situation ist in Figur 6 dargestellt. Dabei schlägt das weitere Betätigungselement an den vorderen Anschlag 34b an. In der in Figur 6 dargestellten Position des Klemmfingers 20 kann der Schneideinsatz 14 entnommen werden.

## Patentansprüche

1. Schneidvorrichtung, mit einem eine schlitzförmige Ausnehmung (16) aufweisenden Halter (13) zur Aufnahme eines Schneideinsatzes (14), der in der Ausnehmung (16) unter Vorspannung eines als eine Seite der Ausnehmung (16) elastisch abspreizbar ausgebildeten Klemmfingers (20) lösbar einspannbar oder eingespannt ist, wobei die andere Seite der Ausnehmung (16) durch einen Basisabschnitt (23) des Halters (13) gebildet ist, wobei der Halter (13) eine eine Drehachse (31) aufweisende Drehlagerausnehmung (25) zum drehbaren Einsetzen eines Betätigungselementes (26a) eines Betätigungswerkzeugs (27) aufweist, und wobei eine Betätigungsfläche (30) vorgesehen ist, gegen die ein weiteres Betätigungselement (26b) des eingesetzten Betätigungswerkzeugs (27) in Anlage bringbar ist, wobei der Abstand zwischen der Drehachse (31) und der Betätigungsfläche (30) im weiteren Verlauf nach vorne abnimmt, sodass der Klemmfinger (20) durch eine Drehbewegung des Betätigungswerkzeugs (27) zur Freigabe des eingespannten Schneideinsatzes (14) aufspreizbar ist, wobei die Drehlagerausnehmung (25) auf Seiten des Basisabschnitts (23) ausgebildet und die Betätigungsfläche von einem Längenabschnitt des die Ausnehmung (16) begrenzenden Randes des Klemmfingers (20) gebildet ist, **dadurch gekennzeichnet, dass** sich die Betätigungsfläche (30) zwischen zwei am Klemmfinger (20) ausgebildeten Anschlägen (34a, 34b) für das eingesetzte Betätigungselement (26b) des Betätigungswerkzeugs (27) erstreckt.

2. Schneidvorrichtung nach Anspruch 1, **dadurch gekennzeichnet, dass** der Klemmfinger (20) eine den Schneideinsatz (14) im eingespannten Zustand auf eine am Basisabschnitt (23) ausgebildete Gegenfläche (24) spannende Klemmfläche (22) aufweist, an die sich in Einführrichtung des Schneideinsatzes (14) die Betätigungsfläche (30) anschließt.

3. Schneidvorrichtung nach Anspruch 3, **dadurch gekennzeichnet, dass** die Klemmfläche (22) über ihre Längserstreckung ununterbrochen ausgebildet ist.

4. Schneidvorrichtung nach einem der vorhergehenden Ansprüche, **dadurch gekennzeichnet, dass** die Betätigungsfläche (30) gegenüber der Klemmfläche (22) bezüglich einer quer zu einer Längsachse (33) der Ausnehmung (16) orientierten Querrichtung zurückversetzt ist.

5. Schneidvorrichtung nach einem der vorhergehenden Ansprüche, **dadurch gekennzeichnet, dass** die Betätigungsfläche (30) Bestandteil einer im Klemmfinger (20) ausgebildeten Aussparung (32) ist, die ihrerseits Bestandteil der Ausnehmung (16) ist.

6. Schneidvorrichtung nach Anspruch 5, **dadurch gekennzeichnet, dass** sich in Einführrichtung hinter der Aussparung (32) ein Freistich (35) anschließt.

7. Schneidvorrichtung nach einem der vorhergehenden Ansprüche, **gekennzeichnet durch** ein den Halter (13) und wenigstens einen Schneideinsatz (14) aufweisendes Schneidwerkzeug (15).

8. Schneidvorrichtung nach einem der vorhergehenden Ansprüche, **dadurch gekennzeichnet, dass** sie wenigstens ein Betätigungswerkzeug (27) aufweist.

9. Schneidvorrichtung nach Anspruch 8, **dadurch gekennzeichnet, dass** das Betätigungswerkzeug (27) als Steckschlüssel ausgebildet ist.

## Claims

1. Cutting device with a holder (13) having a slit-like recess (16) for holding a cutting insert (14) which is releasably able to be clamped or is clamped under preload of a clamping finger (20) in the form of a side of the recess (16) which is elastically able to spread out, wherein the other side of the recess (16) is formed by a base section (23) of the holder (13), wherein the holder (13) has a rotary bearing recess (25) with an axis of rotation (31) for rotatable insertion of an actuating element (26a) of an actuating tool (27), and wherein an actuating surface (30) is provided, against which a further actuating element (26b) of the inserted actuating tool (27) may be brought into contact, wherein the distance between the axis of rotation (31) and the actuating surface (30) reduces in its further course forward, so that the clamping finger (20) may be spread apart by a rotary movement of the actuating tool (27) to release the clamped cutting insert (14), wherein the rotary bearing recess (25) is formed on sides of the base section (23) and the actuating surface is formed by a length section of the edge of the clamping finger (20) bordering the recess (16), **characterised in that** the actuating surface (30) extends between two stops (34a, 34b) formed on the clamping finger (20) for the inserted actuating element (26b) of the actuating tool (27).

2. Cutting device according to claim 1, **characterised in that** the clamping finger (20) has a clamping surface (22) which clamps the cutting insert (14) in the clamped state to a mating surface (24) formed on the base section (23) and which adjoins the actuating surface (30) in the direction of insertion of the cutting insert (14).

3. Cutting device according to claim 3, **characterised in that** the clamping surface (22) is uninterrupted over its longitudinal extent.

4. Cutting device according to any of the preceding claims, **characterised in that** the actuating surface (30) is recessed relative to the clamping surface (22) with respect to a transverse direction oriented transversely to a longitudinal axis (32) of the recess (16).

5. Cutting device according to any of the preceding claims, **characterised in that** the actuating surface (30) is part of an opening (32) formed in the clamping finger (20), which in turn is part of the recess (16).

6. Cutting device according to claim 5, **characterised in that** an undercut (35) follows the opening (32) in the direction of insertion.

7. Cutting device according to any of the preceding claims, **characterised by** a cutting tool (15) which has the holder (13) and at least one cutting insert (14).

8. Cutting device according to any of the preceding claims, **characterised in that** it has at least one actuating tool (27).

9. Cutting device according to claim 8, **characterised in that** the actuating tool (27) is in the form of a socket wrench.

## Revendications

1. Dispositif de découpage, avec un système de maintien (13) présentant un évidement (16) en forme d'entaille, servant à recevoir un insert de découpage (14), qui peut être enserré ou est enserré de manière amovible dans l'évidement (16) sous une précontrainte d'un doigt de serrage (20) réalisé de manière à pouvoir être écarté élastiquement comme un côté de l'évidement (16), dans lequel l'autre côté de l'évidement (16) est formé par une section de base (23) du système de maintien (13), dans lequel le système de maintien (13) présente un évidement de palier rotatif (25) présentant un axe de rotation (31), servant à l'insertion rotative d'un élément d'actionnement (26a) d'un outil d'actionnement (27), et dans lequel une surface d'actionnement (30) est prévue, contre laquelle un autre élément d'actionnement (26b) de l'outil d'actionnement (27) inséré peut être amené en appui, dans lequel la distance entre l'axe de rotation (31) et la surface d'actionnement (30) diminue vers l'avant par la suite de sorte que le doigt de serrage (20) peut être écarté par un mouvement de rotation de l'outil d'actionnement (27) pour débloquer l'insert de découpage (14) enserré, dans lequel l'évidement de palier rotatif (25) est réalisé sur des côtés de la section de base (23) et la surface d'actionnement est formée par une section longitudinale du bord, délimitant l'évidement (16), du doigt de serrage (20), **caractérisé en ce que** la surface d'actionnement (30) s'étend entre deux butées (34a, 34b) réalisées au niveau du doigt de serrage (20) pour l'élément d'actionnement (26b) inséré de l'outil d'actionnement (27).

2. Dispositif de découpage selon la revendication 1, **caractérisé en ce que** le doigt de serrage (20) présente une surface de serrage (22) serrant l'insert de découpage (14) dans l'état enserré sur une contre-surface (24) réalisée au niveau de la section de base (23), à laquelle surface de serrage se raccorde la surface d'actionnement (30) dans la direction d'introduction de l'insert de découpage (14).

3. Dispositif de découpage selon la revendication 3, **caractérisé en ce que** la surface de serrage (22) est réalisée sans interruption sur son extension longitudinale.

4. Dispositif de découpage selon l'une quelconque des revendications précédentes, **caractérisé en ce que** la surface d'actionnement (30) est en retrait en vis-à-vis de la surface de serrage (22) par rapport à une direction transversale orientée de manière transversale par rapport à un axe longitudinal (33) de l'évidement (16).

5. Dispositif de découpage selon l'une quelconque des revendications précédentes, **caractérisé en ce que** la surface d'actionnement (30) fait partie intégrante d'un renfoncement (32) réalisé dans le doigt de serrage (20), qui fait partie intégrante quant à lui de l'évidement (16).

6. Dispositif de découpage selon la revendication 5, **caractérisé en ce qu'**un dégagement (35) se raccorde dans la direction d'introduction après le renfoncement (32).

7. Dispositif de découpage selon l'une quelconque des revendications précédentes, **caractérisé par** un outil de découpage (15) présentant le système de maintien (13) et au moins un insert de découpage (14).

8. Dispositif de découpage selon l'une quelconque des revendications précédentes, **caractérisé en ce qu'**il présente au moins un outil d'actionnement (27).

9. Dispositif de découpage selon la revendication 8, **caractérisé en ce que** l'outil d'actionnement (27) est réalisé sous la forme d'une clé enfichable.
